# EUROPEAN PATENT SPECIFICATION

(11) **EP 3 767 251 B1**
(45) Date of publication and mention of the grant of the patent: **10.05.2023**
(21) Application number: 19766707.4
(22) Date of filing: 05.03.2019
(51) Int. Cl.: G01F 3/22, G01F 1/00, G01F 15/06, G08C 17/00, G08C 19/00, H04W 52/02, H04Q 9/00, G01D 4/00

(54) **GAS SHUTOFF DEVICE, AND RADIO DEVICE FOR GAS SHUTOFF DEVICE**
GASSPERRVORRICHTUNG UND FUNKGERÄT FÜR EINE GASSPERRVORRICHTUNG
DISPOSITIF D'ARRÊT DE GAZ, ET DISPOSITIF RADIO POUR DISPOSITIF D'ARRÊT DE GAZ

(30) Priority: 13.03.2018 JP 2018044867; 13.03.2018 JP 2018044868
(43) Date of publication of application: 20.01.2021
(73) Proprietor: Panasonic Intellectual Property Management Co., Ltd., Osaka-shi, Osaka 540-6207 (JP)
(72) Inventor: SAKATA, Masaaki, Osaka-shi, Osaka 540-6207 (JP); YOKOHATA, Mitsuo, Osaka-shi, Osaka 540-6207 (JP); TERAMOTO, Shota, Osaka-shi, Osaka 540-6207 (JP)
(74) Representative: SSM Sandmair
(86) International application number: PCT/JP2019/008498
(87) International publication number: WO 2019/176626

(56) References cited:
- JP-A- 2003 270 072
- JP-A- 2008 256 535
- JP-A- 2016 148 572
- JP-A- 2016 148 572
- JP-A- 2018 025 514

## Description

### TECHNICAL FIELD

The present invention relates to a gas shutoff device having a communication function, and a wireless device for gas shutoff device.

### BACKGROUND ART

An automatic wireless metering system has been put into practical use, which automatically performs metering of a metering value of a meter that measures an amount of usage of utilities such as gas, electric power, and water.

Among the above meters, meters such as gas and water meters are difficult to be supplied with power from a commercial power supply, and therefore, batteries are used as power supplies. Accordingly, power saving is required for the meter that uses the battery as the power supply. On the other hand, from the viewpoints of energy consumption visualization, energy management including energy monitoring, and added value, there are tendencies such that a metering frequency is increased in order to grasp finer usage charges and to grasp metering values in a shorter cycle, and new sensors are added in order to acquire various information from the meter and improve the value of the meter.

From these viewpoints, various methods have been studied to suppress a current consumption of the meter or wireless device for meter. Moreover, as a communication method, a method of communicating using a Low Power Wide Area (LPWA) communication module at all times or in a shorter communication interval has been proposed. However, a gas meter or wireless device for gas meter is intended to be used without battery replacement for 10 years, and accordingly, power saving is required. In addition, from the viewpoint of added value, current consumption suppression and responsiveness are also important factors. For example, intermittent driving is performed on a meter side and a synchronization signal is transmitted on a master unit side in a short cycle in order to achieve both the current consumption suppression and the responsiveness (for example, refer to PTL 1). A gas meter having a shutoff valve for shutting off a flow passage of gas can be restated as a gas shutoff device, and a wireless device for meter used for the gas meter having the shutoff valve can be restated as a wireless device for gas shutoff device.

### Citation List

### Patent Literature

PTL 1: Unexamined Japanese Patent Publication No. 2001-160990
JP 2003-270072-A discloses a gas meter with a gas shut-off valve, a gas flow meter and a wireless communication unit. An integrated value of the flow rate is transmitted periodically to an external management device.
JP 2016-148572-A discloses a gas meter comprising a gas shut-off valve and meter communication means that can communicate with an alarm via a wireless connection. It further comprises flow rate detection means that detects a gas flow rate, and meter control means that, on the basis of the detection result of the flow rate detection means such as whether or not a gas flow rate is present or is high or low, changes an interval at which the meter communication means is caused to transmit to the alarm information indicating a confirmation of a connection.

### SUMMARY OF THE INVENTION

However, although the power saving can be realized at a certain level with the conventional method, because the power saving is related to a transmission time limit on the master unit side and a reception interval of the meter side or wireless device for meter, the current consumption cannot be suppressed more than a certain amount.

There is also a method of transmitting information to a master unit at the timing of the meter side or the wireless device for meter, and acquiring the information from the master unit after the transmission. With this method, the meter or the wireless device for meter can operate a communication portion in a sleep or low-consumption mode except for a timing of transmission, therefore, the power saving can be achieved.

When this method is used for power saving, the meter or the wireless device for meter generally transmits the information to the master unit in a very long cycle, and a response from the master unit is also received at the above timing. Therefore, a state of the meter is unknown for a long time, or even when data for changing a setting is received from the master unit, the setting of the change cannot be reflected for a long time. According to the present invention, a gas shutoff device according to claim 1 and a wireless device according to claim 7 are provided.

A meter or a wireless device for meter according to the present invention, that is, a gas shutoff device or a wireless device for gas shutoff device, changes a communication interval according to a flow rate measured by a flow rate measuring part, to thereby enhance a responsiveness required according to the flow rate while a minimum necessary communication frequency is maintained, and accordingly, power saving can be achieved and also convenience can be maintained.

The gas shutoff device according to the present invention includes a flow rate measuring part that measures a flow rate of gas flowing through a flow passage, a shutoff valve that shuts off the flow passage, a wireless communicator that periodically performs wireless communication externally, and a communication interval setting part that sets a communication interval in the wireless communication. The communication interval setting part sets the communication interval according to the flow rate of gas measured by the flow rate measuring part.

With the configuration of changing the communication interval according to the flow rate measured by the flow rate measuring part, the responsiveness required according to the flow rate is enhanced while the minimum necessary communication frequency is maintained, and accordingly, the power saving can be achieved and also the convenience can be maintained.

Further, the wireless device for gas shutoff device of the present invention includes a meter communicator that communicates with a gas shutoff device having a flow rate measuring part that measures a flow rate of gas flowing through a flow passage and a shutoff valve that shuts off the flow passage, a wireless communicator that periodically performs wireless communication externally, and a communication interval setting part that sets a communication interval in the wireless communication. The communication interval setting part sets the communication interval according to the flow rate of gas obtained by the meter communicator.

With the configuration of changing the communication interval of the wireless device for gas shutoff device according to the flow rate measured on the side of the gas shutoff device, the responsiveness required according to the flow rate is enhanced while the minimum necessary communication frequency is maintained, and accordingly, the power saving can be achieved and also the convenience can be maintained.

### BRIEF DESCRIPTION OF DRAWINGS

FIG. 1 is a block diagram showing a gas shutoff device according to a first exemplary embodiment.
FIG. 2 is a diagram showing an example of a first communication interval setting of the gas shutoff device according to the first exemplary embodiment.
FIG. 3 is a diagram showing an example of a second communication interval setting of the gas shutoff device according to the first exemplary embodiment.
FIG. 4 is a diagram showing another example of the communication interval setting of the gas shutoff device according to the first exemplary embodiment.
FIG. 5 is a diagram showing another example of the communication interval setting of the gas shutoff device according to the first exemplary embodiment.
FIG. 6 is a block diagram showing a wireless device for gas shutoff device and a gas shutoff device according to a second exemplary embodiment.

### DESCRIPTION OF EMBODIMENTS

### (First exemplary embodiment)

An exemplary embodiment of a gas shutoff device according to the present invention is described below with reference to the accompanying drawings. In the exemplary embodiment described below, a gas meter is taken as an example of the gas shutoff device, and processing of the gas meter is described. In the drawings, the same constitutional elements are designated by the same reference numerals, and the description of the constitutional element already described is omitted. The present invention is not limited to the exemplary embodiment described below.

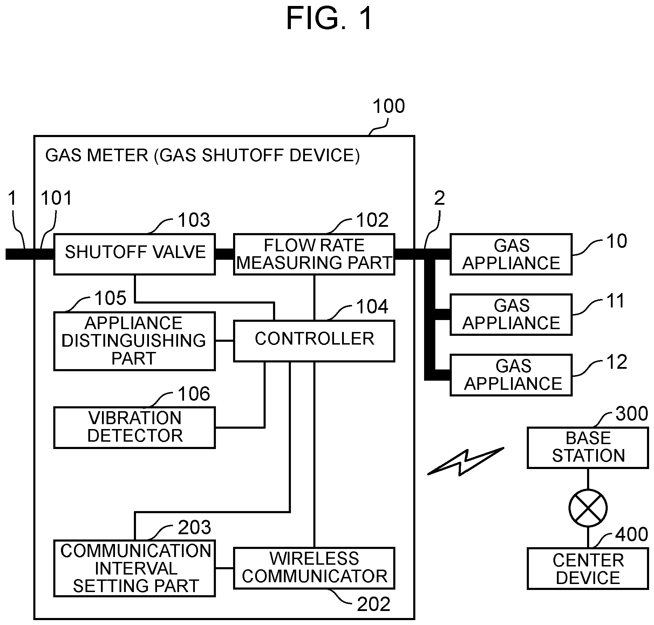

FIG. 1 is a block diagram of a gas meter being a gas shutoff device according to a first exemplary embodiment of the present invention.

In FIG. 1, gas meter 100 includes flow passage 101 through which gas flows, flow rate measuring part 102 that measures a flow rate of gas flowing through flow passage 101, and shutoff valve 103 that shuts off flow passage 101. In addition, gas meter 100 includes controller 104 that exchanges signals with constitutional elements inside gas meter 100 including shutoff valve 103, appliance distinguishing part 105 that determines a gas appliance connected to gas meter 100, and vibration detector 106 that detects vibration caused by an earthquake or the like. Gas meter 100 also includes wireless communicator 202 that communicates with base station 300 being an external device, and communication interval setting part 203 that controls a communication interval in wireless communicator 202. Further, gas meter 100 is connected to gas pipe 1, and gas appliances 10 to 12 are connected to gas meter 100 on a downstream side of gas meter 100 via gas pipes 2.

The constitutional elements and functions in a block are described below.

Flow rate measuring part 102 that measures the flow rate of gas flowing through flow passage 101 is constituted of an ultrasonic flow meter. Flow rate measuring part 102 constituted of the ultrasonic flow meter measures a flow rate of gas as a fluid flowing through flow passage 101 by emitting ultrasonic waves at a fixed time interval (for example, every 0.5 seconds or 2 seconds) to the gas. Here, a common type of gas can be used. In addition, flow rate measuring part 102 is not particularly limited in the configuration, and can be constituted of a circuit for calculating the flow rate by thermal fluctuation, a metering diaphragm in a case of measuring gas, or the like.

Shutoff valve 103 is constituted of an electromagnetic valve, a valve using a stepping motor, or the like, and the shutoff valve can be opened and closed according to an instruction from controller 104 described later. Shutoff valve 103 has functions such that when shutoff valve 103 is opened, the gas is supplied to gas appliances 10 to 12 connected downstream of gas meter 100, and when shutoff valve 103 is closed, the gas is stopped to be supplied.

Appliance distinguishing part 105 distinguishes a type of gas appliance started to be used (water heater, fan heater, stove, and so on), based on a flow rate value acquired by flow rate measuring part 102, and based on changing patterns of flow rate obtained when gas appliances 10 to 12 are started to operate.

Vibration detector 106 is constituted of a vibration sensor, an acceleration sensor, and the like, detects vibration such as an earthquake, and when the vibration more than or equal to a predetermined magnitude is detected, determines that the earthquake has occurred, and then outputs an earthquake occurrence signal, or outputs a vibration value corresponding to a magnitude of the vibration.

Controller 104 is mainly constituted of a microcomputer, a memory, a clock, a storage device, and the like (none of which are shown). Controller 104 is connected to flow rate measuring part 102, shutoff valve 103, appliance distinguishing part 105, vibration detector 106, and wireless communicator 202 described later to exchange signals. Then, controller 104 calculates and integrates the flow rate based on flow rate data measured by flow rate measuring part 102, determines whether or not an abnormality has occurred, shuts off flow passage 101 by shutoff valve 103, and the like. The abnormality leading to the shutoff of flow passage 101 by shutoff valve 103 is exemplified by an abnormality in which the flow rate of gas exceeds a preset maximum flow rate, an abnormality in which a gas usage time period exceeds a preset maximum usage time period, or an occurrence of earthquake or the like detected by vibration detector 106.

Further, controller 104 controls wireless communicator 202 based on a predetermined communication protocol, and wireless communicator 202 transmits a stored integrated value, an output result of vibration detector 106, a control result and a state of shutoff valve 103, and the like to base station 300 being the external device of gas meter 100.

Wireless communicator 202 is constituted of a transmission circuit, a reception circuit, a demodulation circuit, a modulation circuit, a voltage controlled oscillator circuit (VCO circuit), an antenna, and the like (none of which are shown), and according to a predetermined protocol, communicates with, that is, performs transmission and reception with base station 300 outside gas meter 100. Then, radio communicator 202 transmits the integrated value of an amount of gas usage obtained by controller 104, or transmits the detected abnormality to base station 300, or controls the gas meter based on an instruction from base station 300. Accordingly, flow passage 101 can be shut off by shutoff valve 103 of gas meter 100 according to an instruction from center device 400.

Communication interval setting part 203 has a function of controlling the communication interval in wireless communicator 202 based on information obtained from controller 104. Details are described later.

Base station 300 communicates with wireless communicator 202 of gas meter 100 via a not-shown communicator. Further, base station 300 communicates with center device 400 managed and operated by a gas company or the like via an internet line or the like. Additionally, a configuration of center device 400 also serving as base station 300 may be adopted.

With the above configuration, gas meter 100 and center device 400 can communicate with each other, and data such as the amount of gas usage obtained by gas meter 100 can be communicated to center device 400. Further, center device 400 can instruct gas meter 100 to shut off the gas by shutoff valve 103.

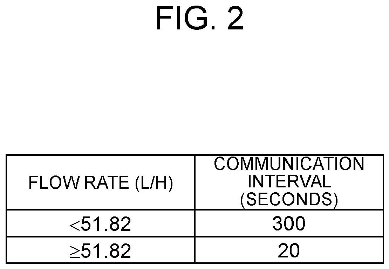

FIG. 2 shows an example of a first communication interval setting made by communication interval setting part 203 of gas meter 100 being the gas shutoff device. In the example of the first communication interval setting, when the flow rate of gas is less than a predetermined flow rate (51.82 L/H), the communication interval is set to 300 seconds, and when the flow rate of gas is more than or equal to the predetermined flow rate (51.82 L/H), the communication interval is set to 20 seconds. This predetermined flow rate (51.82 L/H) is a flow rate at which it can be determined that a gas appliance is being used, and therefore, this predetermined flow rate is a value from which it can be determined that the gas is not being used when the flow rate is smaller than this predetermined flow rate, and some kind of gas appliance is being used when the flow rate is more than or equal to the predetermined flow rate.

With the above communication interval setting, a responsiveness from center device 400 to gas meter 100 can be enhanced during use of the gas. Therefore, even in a case of remotely shutting off flow passage 101, as a service of a gas company, in response to contact from a user who is currently out and has forgotten to turn off the gas appliance, flow passage 101 can be quickly shut off and safety can be secured.

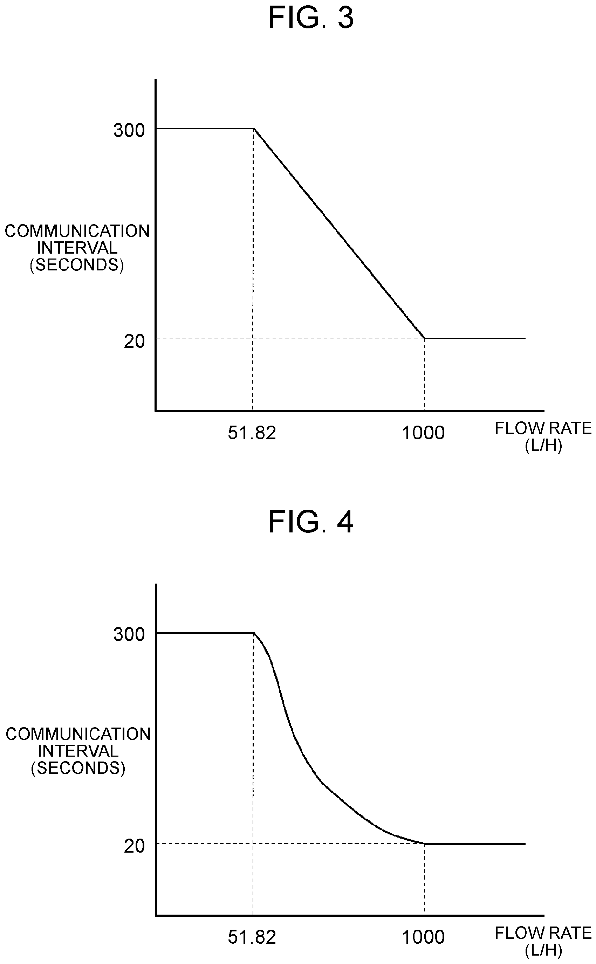

FIG. 3 shows an example of a second communication interval setting made by communication interval setting part 203 of gas meter 100 being the gas shutoff device. In the example of the second communication interval setting, the communication time interval is shortened from 300 seconds to 20 seconds according to an increase of flow rate, in a range of flow rate of gas within a predetermined flow rate (51.82 L/H to 1000 L/H).

According to the above communication interval setting, when an integrated value of the amount of gas usage is communicated from gas meter 100 to center device 400, an amount of change in the integrated value per hour can be reduced by increasing a communication frequency as the flow rate increases. Therefore, because center device 400 can finely grasp a gas usage status, the gas usage status can be acquired in real time and a demand analysis can be performed.

In the example of the communication interval setting shown in FIG. 3, the flow rate and the communication time interval are changed in proportion to each other. Alternatively, FIG. 4 shows another example of the communication interval setting made by communication interval setting part 203. As shown in FIG. 4, in the example of this communication interval setting, the transmission time is exponentially shortened as the flow rate increases. By the communication interval setting in this way, an accuracy required can be obtained according to the flow rate, and the communication interval setting can be arbitrarily set according to the accuracy required for the demand analysis.

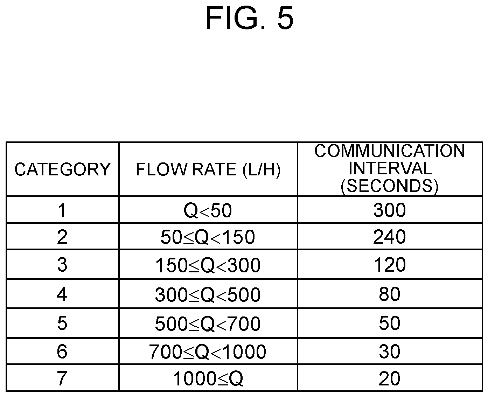

Further, FIG. 5 shows another example of the communication interval setting made by communication interval setting part 203. As shown in FIG. 5, in the example of this communication interval setting, the communication interval in wireless communicator 202 is set for each predetermined flow rate category, and the communication interval is set according to the flow rate category to which a flow rate Q measured by flow rate measuring part 102 belongs. With this configuration, the communication interval can be arbitrarily set without calculation according to a flow rate band.

As described above, according to gas meter 100 being the gas shutoff device according to the present exemplary embodiment, by changing the communication interval in wireless communicator 202 according to the flow rate measured on the meter side, the responsiveness required according to the flow rate is enhanced while the minimum necessary communication frequency is secured. Therefore, power saving can be achieved and also convenience can be maintained.

Additionally, based on the flow rate of gas measured by flow rate measuring part 102, after it is determined that the gas is started to be used, when a configuration is made in which the communication interval in wireless communicator 202 is set to a possible shortest time just for a predetermined time period, center device 400 can quickly respond to an abnormality that may occur when the gas appliance is started to be used.

Further, after shutoff valve 103 is closed by detecting an abnormality based on the flow rate of gas measured by flow rate measuring part 102 or occurrence of an earthquake by vibration detector 106, the communication interval in wireless communicator 202 is set to a possible shortest time just for a predetermined time period, and accordingly, center device 400 can quickly respond to the abnormality when the abnormality occurs.

The present invention is not limited to the above-described exemplary embodiment, and can be implemented in various modes without departing from the scope of the present invention. For example, in the present exemplary embodiment, the flow rate to determine the usage of gas appliance has been described as 51.82 L/H, however, when the gas appliance installed downstream the gas meter is known in advance, the flow rate to determine the usage of gas appliance can be set according to the minimum flow rate of the gas appliance. Further, the communication interval in wireless communicator 202 has been described as 300 seconds at maximum and 20 seconds at minimum, however, it is obvious that the communication interval can be arbitrarily set according to a battery capacity and the required responsiveness.

### (Second exemplary embodiment)

Hereinafter, a wireless device for gas shutoff device according to a second exemplary embodiment of the present invention is described with reference to the accompanying drawings. In the exemplary embodiment described below, as an example of the wireless device for gas shutoff device, a wireless slave unit that is connected by wire to a gas meter being a gas shutoff device is exemplified, and processing of the wireless slave unit is described. In the drawings, the same constitutional elements as those of the gas shutoff device according to the first exemplary embodiment are designated by the same reference numerals. The present invention is not limited to the exemplary embodiment described below.

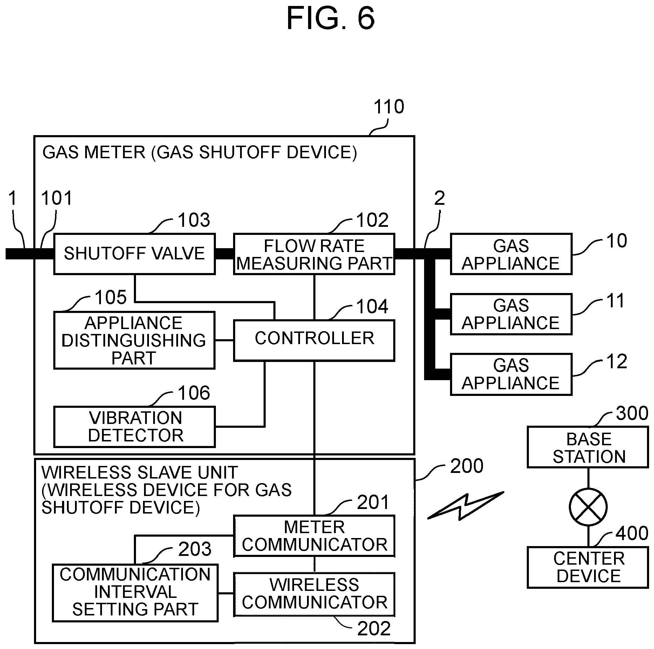

FIG. 6 is a block diagram of the wireless slave unit being the wireless device for gas shutoff device, and the gas meter being the gas shutoff device connected by wire to the wireless slave unit, according to the second exemplary embodiment of the present invention.

In FIG. 6, gas meter 110 includes flow passage 101 through which gas flows, flow rate measuring part 102 that measures a flow rate of gas flowing through flow passage 101, and shutoff valve 103 that shuts off flow passage 101. Further, gas meter 110 includes controller 104 that exchanges signals with constitutional elements inside gas meter 110 including shutoff valve 103, appliance distinguishing part 105 that determines a gas appliance connected to gas meter 110, and vibration detector 106 that detects vibration caused by an earthquake or the like. Further, gas meter 110 is connected to gas pipe 1, and gas appliances 10 to 12 are connected on a downstream side of gas meter 110 via gas pipe 2.

Wireless slave unit 200 being the wireless device for gas shutoff device, includes meter communicator 201 connected to controller 104 of gas meter 110, wireless communicator 202 and communication interval setting part 203 respectively connected to meter communicator 201.

The constitutional elements and functions in a block are described below.

Flow rate measuring part 102 that measures the flow rate of gas flowing through flow passage 101 is constituted of an ultrasonic flow meter. Flow rate measuring part 102 constituted of the ultrasonic flow meter measures a flow rate of gas as a fluid flowing through flow passage 101 by emitting ultrasonic waves at a fixed time interval (for example, every 0.5 seconds or 2 seconds) to the gas. Here, a common type of gas can be used. In addition, a configuration of flow rate measuring part 102 is not particularly limited, and flow rate measuring part 102 can be constituted of a circuit for calculating the flow rate by thermal fluctuation, or can be constituted of a metering diaphragm in a case of measuring gas.

Shutoff valve 103 is constituted of an electromagnetic valve, a valve using a stepping motor, or the like, and the shutoff valve can be opened and closed according to an instruction from controller 104 described later. Shutoff valve 103 has functions such that when shutoff valve 103 is opened, the gas is supplied to gas appliances 10 to 12 connected downstream of gas meter 100, and when shutoff valve 103 is closed, the gas is stopped to be supplied.

Appliance distinguishing part 105 distinguishes a type of gas appliance started to be used (water heater, fan heater, stove, and so on), based on a flow rate value acquired by flow rate measuring part 102, and based on changing patterns of flow rate obtained when gas appliances 10 to 12 are started to operate.

Vibration detector 106 is constituted of a vibration sensor, an acceleration sensor, and the like, detects vibration such as an earthquake, and when the vibration more than or equal to a predetermined magnitude is detected, determines that the earthquake has occurred, and then outputs an earthquake occurrence signal, or outputs a vibration value corresponding to a magnitude of the vibration.

Controller 104 is mainly constituted of a microcomputer, a memory, a clock, a storage device, and the like (none of which are shown). Controller 104 is connected to flow rate measuring part 102, shutoff valve 103, appliance distinguishing part 105, and vibration detector 106 to exchange signals, and at the same time, connected to meter communicator 201 described later via a communication interface (not shown) to exchange signals. Then, controller 104 calculates and integrates the flow rate based on flow rate data measured by flow rate measuring part 102, determines whether or not an abnormality has occurred, and shuts off flow passage 101 using shutoff valve 103. The abnormality leading to the shutoff of flow passage 101 by shutoff valve 103 is exemplified by an abnormality in which the flow rate of gas exceeds a preset maximum flow rate, an abnormality in which a gas usage time period exceeds a preset maximum usage time period, or the occurrence of earthquake or the like detected by vibration detector 106.

Further, controller 104 has a function to communicate with meter communicator 201 of wireless slave unit 200 being the wireless device for gas shutoff device based on a predetermined communication protocol.

Meter communicator 201 communicates with controller 104, and receives, from controller 104, an integrated value stored in controller 104, an output result of vibration detector 106, a control result and a state of shutoff valve 103, and the like. Alternatively, meter communicator 201 transmits control data and the like received from center device 400 described later to controller 104.

Wireless communicator 202 is constituted of a transmission circuit, a reception circuit, a demodulation circuit, a modulation circuit, a VCO circuit, an antenna, and the like (none of which are shown), and according to a predetermined protocol, communicates with, that is, performs transmission and reception with base station 300 outside gas meter 110. Then, wireless communicator 202 transmits the integrated value of an amount of gas usage obtained via meter communicator 201 or the detected abnormality to base station 300, or transmits control data instructed from base station 300 to gas meter 110 via meter communicator 201. Accordingly, flow passage 101 can be shut off by shutoff valve 103 of gas meter 110 according to an instruction from center device 400.

Communication interval setting part 203 has a function of controlling a communication interval in wireless communicator 202 based on information obtained via meter communicator 201. Details are described later.

Base station 300 communicates with wireless communicator 202 of wireless slave unit 200 being the wireless device for gas shutoff device via the not-shown communicator. Further, base station 300 communicates with center device 400 managed and operated by a gas company or the like via an internet line or the like. Additionally, a configuration of center device 400 also serving as base station 300 may be adopted.

With the above configuration, gas meter 110 can communicate with center device 400 via wireless slave unit 200, and data such as an amount of gas usage obtained by gas meter 110 can be communicated to center device 400. Further, center device 400 can instruct gas meter 110 to shut off the gas by shutoff valve 103.

Next, an example of a communication interval setting between wireless communicator 202 provided in wireless slave unit 200 being the wireless device for gas shutoff device according to the present exemplary embodiment and base station 300 is described. Note that the example of the communication interval setting in the present exemplary embodiment is similar to the example of the communication interval setting in the first exemplary embodiment, and is described with reference to FIGS. 2 to FIG. 5.

FIG. 2 shows a first example of setting time made by communication interval setting part 203 of wireless slave unit 200 being the wireless device for gas shutoff device according to the present exemplary embodiment. In the example of the first communication interval setting, when the flow rate of gas is less than a predetermined flow rate (51.82 L/H), the communication interval is set to 300 seconds, and when the flow rate of gas is more than or equal to the predetermined flow rate (51.82 L/H), the communication interval is set to 20 seconds. This predetermined flow rate (51.82 L/H) is a flow rate at which it can be determined that a gas appliance is being used, and therefore, this predetermined flow rate is a value from which it can be determined that the gas is not being used when the flow rate is smaller than this predetermined flow rate, and some kind of gas appliance is being used when the flow rate is more than or equal to the predetermined flow rate.

With the above communication interval setting, a responsiveness from center device 400 to gas meter 110 via wireless slave unit 200 can be enhanced during use of the gas. Therefore, even in a case of remotely shutting off flow passage 101, as a service of a gas company, in response to contact from a user who is currently out and has forgotten to turn off the gas appliance, flow passage 101 can be quickly shut off and safety can be secured.

FIG. 3 shows an example of a second communication interval setting made by communication interval setting part 203 of wireless slave unit 200 being the wireless device for gas shutoff device. In the example of the second communication interval setting, the communication time interval is shortened from 300 seconds to 20 seconds according to an increase of flow rate, in a range of flow rate of gas within a predetermined flow rate (51.82 L/H to 1000 L/H).

According to the above communication interval setting, when the integrated value of the amount of gas usage is communicated from wireless slave unit 200 to center device 400, an amount of change in the integrated value per hour can be reduced by increasing a communication frequency as the flow rate increases. Therefore, because center device 400 can finely grasp a gas usage status, the gas usage status can be acquired in real time and a demand analysis can be performed.

In the example of the communication interval setting shown in FIG. 3, the flow rate and the communication time interval are changed in proportion to each other. Alternatively, FIG. 4 shows another example of the communication interval setting made by communication interval setting part 203. As shown in FIG. 4, in the example of this communication interval setting, the transmission time is exponentially shortened as the flow rate increases. By the communication interval setting in this way, an accuracy required can be obtained according to the flow rate, and the communication interval setting can be arbitrarily set according to the accuracy required for the demand analysis.

Further, FIG. 5 shows another example of the communication interval setting made by communication interval setting part 203. As shown in FIG. 5, in the example of this communication interval setting, the communication interval in wireless communicator 202 is set for each predetermined flow rate category, and the communication interval is set according to the flow rate category to which a flow rate Q measured by flow rate measuring part 102 belongs. With this configuration, the communication interval can be arbitrarily set without calculation according to a flow rate band.

As described above, according to wireless slave unit 200 being the wireless device for gas shutoff device according to the present exemplary embodiment, by changing the communication interval in wireless communicator 202 of wireless slave unit 200 according to the flow rate measured in gas meter 110, the responsiveness required according to the flow rate is enhanced while the minimum necessary communication frequency is secured. Therefore, power saving can be achieved and also convenience can be maintained.

Additionally, based on the flow rate of gas measured by flow rate measuring part 102, after it is determined that the gas is started to be used, when a configuration is made in which the communication interval in wireless communicator 202 is set to a possible shortest time just for a predetermined time period, center device 400 can quickly respond to an abnormality that may occur when the gas appliance is started to be used.

Further, after shutoff valve 103 is closed by detecting an abnormality based on the flow rate of gas measured by flow rate measuring part 102 or occurrence of an earthquake by vibration detector 106, the communication interval in wireless communicator 202 is set to a possible shortest time just for a predetermined time period, and accordingly, center device 400 can quickly respond to the abnormality when the abnormality occurs.

The present invention is not limited to the above-described exemplary embodiment, and can be implemented in various modes without departing from the scope of the present invention. For example, in the present exemplary embodiment, the flow rate to determine the usage of the gas appliance has been described as 51.82 L/H, however, when the gas appliance installed downstream the gas meter is known in advance, the flow rate to determine the usage of gas appliance can be set according to the minimum flow rate of the gas appliance. Further, the communication interval in wireless communicator 202 has been described as 300 seconds at maximum and 20 seconds at minimum, however, it is obvious that the communication interval can be arbitrarily set according to a battery capacity and the required responsiveness.

### INDUSTRIAL APPLICABILITY

As described above, the gas shutoff device or the wireless device for gas shutoff device according to the present invention can achieve power saving and also secure responsiveness by setting the communication interval according to the flow rate.

### REFERENCE MARKS IN THE DRAWINGS

- 100, 110: gas meter (gas shutoff device)
- 101: flow passage
- 102: flow rate measuring part
- 103: shutoff valve
- 104: controller
- 105: appliance distinguishing part
- 106: vibration detector
- 200: wireless slave unit (wireless device for gas shutoff device)
- 201: meter communicator
- 202: wireless communicator
- 203: communication interval setting part
- 300: base station
- 400: center device

## Claims

1. A gas shutoff device (100, 110) comprising:
a flow rate measuring part (102) configured to measure a flow rate of gas flowing through a flow passage;
a shutoff valve (103) that is configured to shut off the flow passage;
a wireless communicator (202) configured to periodically perform wireless communication externally; and
a communication interval setting part (203) configured to set a communication interval in the wireless communication,
wherein
the communication interval setting part (203) is configured to set the communication interval shorter as the flow rate of gas measured by the flow rate measuring part (102) increases, and
the wireless communicator (202) is configured to transmit an integrated value of the gas usage amount obtained by integrating the flow rate of gas measured by the flow rate measuring part (102).

2. The gas shutoff device (100, 110) according to claim 1,
wherein the communication interval setting part (203) is configured to set, when the communication interval setting part determines based on the flow rate of gas measured by the flow rate measuring part (102) that gas is not being used, the communication interval to a possible longest time that is preset, and to set, when the communication interval setting part determines based on the flow rate of gas measured by the flow rate measuring part (102) that the gas is being used, the communication interval to be shorter than the possible longest time.

3. The gas shutoff device (100, 110) according to claim 1 or 2,
wherein the flow rate of gas measured by the flow rate measuring part (102) are categorized into a plurality of gas flow rate categories each having a predetermined flow rate band, and
the communication interval setting part (203) is configured to set the communication interval according to one of the gas flow rate categories to which the flow rate of gas measured by the flow rate measuring part (102) belongs.

4. The gas shutoff device (100, 110) according to any one of claims 1 to 3,
wherein the communication interval setting part (203) is configured to set, when the communication interval setting part determines based on the flow rate of gas measured by the flow rate measuring part (203) that the gas is started to be used, the communication interval to a possible shortest time for a predetermined time period.

5. The gas shutoff device (100, 110) according to any one of claims 1 to 3,
wherein the communication interval setting part (203) is configured to set the communication interval after the shutoff valve is shut off to a possible shortest time that is preset, for a predetermined time period.

6. The gas shutoff device (100, 110) according to claim 4,
wherein the communication interval setting part (203) is configured to set the communication interval after the shutoff valve is shut off to a possible shortest time that is preset, for a predetermined time period.

7. A wireless device (200) for use with a gas shutoff device (100, 110) comprising:
a meter communicator (201) is configured to communicate with a gas shutoff device having a flow rate measuring part (102) that measures a flow rate of gas flowing through a flow passage and a shutoff valve that shuts off the flow passage;
a wireless communicator (202) configured to periodically perform wireless communication externally; and
a communication interval setting part (203) configured to set a communication interval in the wireless communication,
wherein
the communication interval setting part (203) is configured to set the communication interval shorter as the flow rate of gas obtained by the meter communicator (201) increases, and
the wireless communicator (202) is configured to transmit an integrated value of the gas usage amount obtained by the meter communicator (201).

8. The wireless device (200) according to claim 7.
wherein the communication interval setting part (203) is configured to set, when the communication interval setting part (203) determines based on the flow rate of gas obtained by the meter communicator that gas is not being used, the communication interval to a possible longest time that is preset, and to set, when the communication interval setting part (203) determines based on the flow rate of gas measured by the flow rate measuring part that the gas is being used, the communication interval to be shorter than the possible longest time.

9. The wireless device (200) according to claim 7 of 8,
wherein the flow rate of gas measured by the flow rate measuring part (102) are categorized into a plurality of gas flow rate categories each having a predetermined flow rate band, and
the communication interval setting part (203) is configured to set the communication interval according to one of the gas flow rate categories obtained by the meter communicator (201).

10. The wireless device (200) according to any one of claims 7 to 9,
wherein the communication interval setting part (203) is configured to set, when the communication interval setting part (203) determines based on the flow rate measured by the flow rate measuring part (102) that the gas is started to be used, the communication interval to a possible shortest time for a predetermined time period.

11. The wireless device (200) according to any one of claims 7 to 8,
wherein the communication interval setting part (203) is configured to set the communication interval after the shutoff valve is shut off to a possible shortest time that is preset, for a predetermined time period.

12. The wireless device (200) according to claim
wherein the communication interval setting part (203) is configured to set the communication interval after the shutoff valve is shut off to a possible shortest time that is preset, for a predetermined time period.

## Patentansprüche

1. Gasabsperrvorrichtung (100, 110), die umfasst:
einen Strömungsraten-Messteil (102), der so konfiguriert ist, dass es eine Strömungsrate eines Gases misst, das durch einen Strömungsdurchgang strömt;
ein Absperrventil (103), das den Strömungsdurchgang absperrt ;
einen drahtlosen Kommunikator (202), der so konfiguriert ist, dass er periodisch eine drahtlose externe Kommunikation durchführt; und
einen Kommunikationsintervall-Einstellteil (203), der konfiguriert ist, um ein Kommunikationsintervall in der drahtlosen Kommunikation einzustellen,
wobei
der Kommunikationsintervall-Einstellteil (203) so konfiguriert ist, dass er das Kommunikationsintervall kürzer einstellt, wenn die durch den Strömungsraten-Messteil (102) gemessene Gasströmungsrate zunimmt, und
der drahtlose Kommunikator (202) so konfiguriert ist, dass er einen integrierten Wert der Gasverbrauchsmenge überträgt, der durch Integrieren der durch den Strömungsraten-Messteil (102) gemessenen Gasströmungsrate erhalten wird.

2. Gasabsperrvorrichtung (100, 110) nach Anspruch 1,
wobei der Kommunikationsintervall-Einstellteil (203) dazu konfiguriert ist, wenn der Kommunikationsintervall-Einstellteil basierend auf der durch das Strömungsraten-Messteil (102) gemessenen Gasflussrate bestimmt, dass kein Gas verwendet wird, das Kommunikationsintervall auf eine mögliche längste voreingestellte Zeit einzustellen, und, wenn der Kommunikationsintervall-Einstellteil basierend auf der durch das Strömungsraten-Messteil (102) gemessenen Gasströmungsrate bestimmt, dass das Gas verwendet wird, das Kommunikationsintervall kürzer als die mögliche längste Zeit einzustellen.

3. Gasabsperrvorrichtung (100, 110) nach Anspruch 1 oder 2,
wobei die durch den Strömungsraten-Messteil (102) gemessene Gasströmungsrate in eine Vielzahl von Gasströmungsratenkategorien kategorisiert wird, die jeweils ein vorbestimmtes Strömungsratenband aufweisen, und
der Kommunikationsintervall-Einstellteil (203) so konfiguriert ist, dass er das Kommunikationsintervall gemäß einer der Gasströmungsraten-Kategorien einstellt, zu denen die durch das Strömungsraten-Messteil (102) gemessene Gasströmungsrate gehört.

4. Gasabsperrvorrichtung (100, 110) nach einem der Ansprüche 1 bis 3,
wobei der Kommunikationsintervall-Einstellteil (203) dazu konfiguriert ist, wenn der Kommunikationsintervall-Einstellteil basierend auf der durch das Strömungsraten-Messteil (203) gemessenen Gasströmungsrate bestimmt, dass mit der Verwendung des Gases begonnen wird, das Kommunikationsintervall für einen vorbestimmten Zeitraum auf eine mögliche kürzeste Zeit einzustellen.

5. Gasabsperrvorrichtung (100, 110) nach einem der Ansprüche 1 bis 3,
wobei der Kommunikationsintervall-Einstellteil (203) dazu konfiguriert ist, das Kommunikationsintervall, nachdem das Absperrventil abgeschaltet ist, für eine vorbestimmte Zeitdauer auf eine mögliche kürzeste voreingestellte Zeit einzustellen.

6. Gasabsperrvorrichtung (100, 110) nach Anspruch 4,
wobei der Kommunikationsintervall-Einstellteil (203) dazu konfiguriert ist, das Kommunikationsintervall, nachdem das Absperrventil abgeschaltet ist, für eine vorbestimmte Zeitdauer auf eine mögliche kürzeste Zeit einzustellen, die voreingestellt ist.

7. Drahtlose Vorrichtung (200) zur Verwendung mit einer Gasabsperrvorrichtung (100, 110), die umfasst:
ein Zählerkommunikator (201), der konfiguriert ist, um mit einer Gasabsperrvorrichtung zu kommunizieren, die einen Strömungsraten-Messteil (102), der eine Strömungsrate eines durch einen Strömungsdurchgang strömenden Gases misst, und ein Absperrventil aufweist, das den Strömungsdurchgang absperrt;
einen drahtlosen Kommunikator (202), der so konfiguriert ist, dass er periodisch eine drahtlose externe Kommunikation durchführt; und
einen Kommunikationsintervall-Einstellteil (203), der konfiguriert ist, um ein Kommunikationsintervall in der drahtlosen Kommunikation einzustellen,
wobei
der Kommunikationsintervall-Einstellteil (203) so konfiguriert ist, dass er das Kommunikationsintervall kürzer einstellt, wenn die Strömungsrate des Gases, die von dem Messgerät-Kommunikator (201) erhalten wird, zunimmt, und
der drahtlose Kommunikator (202) konfiguriert ist, um einen integrierten Wert der Gasverbrauchsmenge, die von dem Messgerät-Kommunikator (201) erhalten wird, zu übertragen.

8. Drahtlose Vorrichtung (200) nach Anspruch 7,
wobei der Kommunikationsintervall-Einstellteil (203) konfiguriert ist, um, wenn der Kommunikationsintervall-Einstellteil (203) basierend auf der durch den Zählerkommunikator erhaltenen Gasflussrate bestimmt, dass kein Gas verwendet wird, das Kommunikationsintervall auf eine mögliche längste, voreingestellten Zeit einzustellen, und, wenn der Kommunikationsintervall-Einstellteil (203) basierend auf der durch das Strömungsraten-Messteil gemessenen Gasflussrate bestimmt, dass das Gas verwendet wird, das Kommunikationsintervall kürzer als die mögliche längste Zeit einzustellen.

9. Drahtlose Vorrichtung (200) nach Anspruch 7 oder 8,
wobei die durch den Strömungsraten-Messteil (102) gemessene Gasströmungsrate in eine Vielzahl von Gasströmungsraten-Kategorien kategorisiert wird, die jeweils ein vorbestimmtes Strömungsratenband aufweisen, und
der Kommunikationsintervall-Einstellteil (203) so konfiguriert ist, dass er das Kommunikationsintervall gemäß einer der Gasströmungsraten-Kategorien einstellt, die von dem Messgerät-Kommunikator (201) erhalten werden.

10. Drahtlose Vorrichtung (200) nach einem der Ansprüche 7 bis 9,
wobei der Kommunikationsintervall-Einstellteil (203) dazu konfiguriert ist, wenn der Kommunikationsintervall-Einstellteil (203) basierend auf der durch den Strömungsraten-Messteil (102) gemessenen Strömungsrate bestimmt, dass die Verwendung des Gases begonnen hat, das Kommunikationsintervall für eine vorgegebene Zeitdauer auf eine mögliche kürzeste Zeit einzustellen.

11. Drahtlose Vorrichtung (200) nach einem der Ansprüche 7 bis 8,
wobei der Kommunikationsintervall-Einstellteil (203) dazu konfiguriert ist, das Kommunikationsintervall, nachdem das Absperrventil abgeschaltet ist, für eine vorbestimmte Zeitdauer auf eine mögliche kürzeste, voreingestellte Zeit einzustellen.

12. Drahtlose Vorrichtung (200) nach Anspruch 10,
wobei der Kommunikationsintervall-Einstellteil (203) dazu konfiguriert ist, das Kommunikationsintervall, nachdem das Absperrventil abgeschaltet ist, für eine vorbestimmte Zeitdauer auf eine mögliche kürzeste, voreingestellte Zeit einzustellen.

## Revendications

1. Dispositif d'arrêt de gaz (100, 110) comprenant :
une partie de mesure de débit (102) configurée pour mesurer un débit de gaz s'écoulant à travers un passage d'écoulement ;
une vanne d'arrêt (103) qui est configurée pour fermer le passage d'écoulement ;
un communicateur sans fil (202) configuré pour effectuer périodiquement une communication sans fil en externe ; et
une partie de réglage d'intervalle de communication (203) configurée pour régler un intervalle de communication dans la communication sans fil, dans lequel
la partie de réglage d'intervalle de communication (203) est configurée pour régler l'intervalle de communication plus court lorsque le débit de gaz mesuré par la partie de mesure de débit (102) augmente, et
le communicateur sans fil (202) est configuré pour transmettre une valeur intégrée de la quantité d'utilisation de gaz obtenue en intégrant le débit de gaz mesuré par la partie de mesure de débit (102).

2. Dispositif d'arrêt de gaz (100, 110) selon la revendication 1,
dans lequel la partie de réglage d'intervalle de communication (203) est configurée pour régler, lorsque la partie de réglage d'intervalle de communication détermine sur la base du débit de gaz mesuré par la partie de mesure de débit (102) que le gaz n'est pas utilisé, l'intervalle de communication à un temps le plus long possible qui est préréglé, et pour régler, lorsque la partie de réglage d'intervalle de communication détermine sur la base du débit de gaz mesuré par la partie de mesure de débit (102) que le gaz est utilisé, l'intervalle de communication pour être plus court que le temps le plus long possible.

3. Dispositif d'arrêt de gaz (100, 110) selon la revendication 1 ou 2,
dans lequel le débit de gaz mesuré par la partie de mesure de débit (102) est classé en une pluralité de catégories de débit de gaz ayant chacune une bande de débit prédéterminée, et
la partie de réglage d'intervalle de communication (203) est configurée pour régler l'intervalle de communication selon l'une des catégories de débit de gaz à laquelle appartient le débit de gaz mesuré par la partie de mesure de débit (102).

4. Dispositif d'arrêt de gaz (100, 110) selon l'une quelconque des revendications 1 à 3, dans lequel la partie de réglage d'intervalle de communication (203) est configurée pour régler, lorsque la partie de réglage d'intervalle de communication détermine sur la base du débit de gaz mesuré par la partie de mesure de débit (203) que le gaz commence à être utilisé, l'intervalle de communication à un temps le plus court possible pendant une période de temps prédéterminée.

5. Dispositif d'arrêt de gaz (100, 110) selon l'une quelconque des revendications 1 à 3, dans lequel la partie de réglage d'intervalle de communication (203) est configurée pour régler l'intervalle de communication après la fermeture de la vanne d'arrêt à un temps le plus court possible qui est préréglé, pour une durée prédéterminée.

6. Dispositif d'arrêt de gaz (100, 110) selon la revendication 4,
dans lequel la partie de réglage d'intervalle de communication (203) est configurée pour régler l'intervalle de communication après la fermeture de la vanne d'arrêt à un temps le plus court possible qui est préréglé, pour un période de temps prédéterminée.

7. Dispositif sans fil (200) destiné à être utilisé avec un dispositif d'arrêt de gaz (100, 110) comprenant :
un communicateur de compteur (201) configuré pour communiquer avec un dispositif d'arrêt de gaz ayant une partie de mesure de débit (102) qui mesure un débit de gaz s'écoulant à travers un passage d'écoulement et une vanne d'arrêt qui ferme le passage d'écoulement ;
un communicateur sans fil (202) configuré pour effectuer périodiquement une communication sans fil en externe ; et
une partie de réglage d'intervalle de communication (203) configurée pour régler un intervalle de communication dans la communication sans fil,
dans lequel la partie de réglage d'intervalle de communication (203) est configurée pour régler l'intervalle de communication plus court lorsque le débit de gaz obtenu par le communicateur de compteur (201) augmente, et
le communicateur sans fil (202) est configuré pour transmettre une valeur intégrée de la quantité d'utilisation de gaz obtenue par le communicateur de compteur (201).

8. Dispositif sans fil (200) selon la revendication 7,
dans lequel la partie de réglage d'intervalle de communication (203) est configurée pour régler, lorsque la partie de réglage d'intervalle de communication (203) détermine sur la base du débit de gaz obtenu par le communicateur de compteur que le gaz n'est pas utilisé, l'intervalle de communication à un temps le plus long possible qui est préréglé, et pour régler, lorsque la partie de réglage d'intervalle de communication (203) détermine sur la base du débit de gaz mesuré par la partie de mesure de débit que le gaz est utilisé, l'intervalle de communication pour être plus court que le temps le plus long possible.

9. Dispositif sans fil (200) selon la revendication 7 ou 8,
dans lequel le débit de gaz mesuré par la partie de mesure de débit (102) est catégorisé en une pluralité de catégories de débit de gaz ayant chacune une bande de débit prédéterminée, et
la partie de réglage d'intervalle de communication (203) est configurée pour régler l'intervalle de communication selon l'une des catégories de débit de gaz obtenues par le communicateur de compteur (201).

10. Dispositif sans fil (200) selon l'une quelconque des revendications 7 à 9,
dans lequel la partie de réglage d'intervalle de communication (203) est configurée pour régler, lorsque la partie de réglage d'intervalle de communication (203) détermine sur la base du débit mesuré par le partie de mesure de débit (102) que le gaz commence à être utilisé, l'intervalle de communication à un temps le plus court possible pendant une période de temps prédéterminée.

11. Dispositif sans fil (200) selon l'une quelconque des revendications 7 à 8,
dans lequel la partie de réglage d'intervalle de communication (203) est configurée pour régler l'intervalle de communication après la fermeture de la vanne d'arrêt à un temps le plus court possible qui est préréglé, pendant une période de temps prédéterminée.

12. Dispositif sans fil (200) selon la revendication 10,
dans lequel la partie de réglage d'intervalle de communication (203) est configurée pour régler l'intervalle de communication après que la vanne d'arrêt est fermée à un temps le plus court possible qui est préréglé, pour une période de temps prédéterminée.
